(19) Europäisches Patentamt / European Patent Office / Office européen des brevets

(11) **EP 3 357 740 B1**

(12) **EUROPÄISCHE PATENTSCHRIFT**

(45) Veröffentlichungstag und Bekanntmachung des Hinweises auf die Patenterteilung:
**10.05.2023  Patentblatt 2023/19**

(21) Anmeldenummer: **18154082.4**

(22) Anmeldetag: **30.01.2018**

(51) Internationale Patentklassifikation (IPC):
**B60L 53/14** (2019.01)   **B60L 5/42** (2006.01)
**B60L 53/30** (2019.01)

(52) Gemeinsame Patentklassifikation (CPC):
**B60L 5/42; B60L 53/14; B60L 53/32;**
B60L 2200/18; Y02T 10/70; Y02T 10/7072;
Y02T 90/12; Y02T 90/14

(54) **VORRICHTUNG ZUM AUFLADEN EINES ELEKTRISCHEN ENERGIESPEICHERS EINES EINEN ELEKTRISCHEN ANTRIEB AUFWEISENDEN FAHRZEUGS**

DEVICE FOR CHARGING AN ELECTRICAL ENERGY STORAGE DEVICE OF A VEHICLE WITH AN ELECTRICAL DRIVE

DISPOSITIF DE CHARGEMENT D'UN ACCUMULATEUR D'ÉNERGIE ÉLECTRIQUE D'UN VÉHICULE COMPORTANT UN ENTRAÎNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2017  DE 102017000915**

(43) Veröffentlichungstag der Anmeldung:
**08.08.2018  Patentblatt 2018/32**

(73) Patentinhaber: **MAN Truck & Bus SE
80995 München (DE)**

(72) Erfinder: **Antwerpen, Korbinian
DE/85716 Unterschleissheim (DE)**

(74) Vertreter: **Liebl, Thomas
Neubauer - Liebl - Bierschneider - Massinger
Münchener Straße 49
85051 Ingolstadt (DE)**

(56) Entgegenhaltungen:
**EP-A1- 3 115 248          WO-A1-2015/173036
DE-A1-102014 213 831   DE-A1-102014 226 357
US-A1- 2016 185 239**

**Beschreibung**

Die Erfindung betrifft eine Vorrichtung zum Aufladen eines elektrischen Energiespeichers, insbesondere einer Traktionsbatterie, nach Patentanspruchs1, ein Fahrzeug mit der Vorrichtung nach Patentanspruch 11 sowie ein Verfahren zum Aufladen eines elektrischen Energiespeichers, insbesondere einer Traktionsbatterie, nach Patentanspruch 13.

Es sind Fahrzeuge, insbesondere Omnibusse, mit einem elektrischen Antrieb bekannt, deren elektrischer Energiespeicher bzw. deren Traktionsbatterie an ortsfesten Ladestationen mit elektrischer Energie aufgeladen werden kann. Derartige Fahrzeuge können beispielsweise über einen rein elektrischen Antrieb oder aber auch über einen Hybridantrieb mit Elektromotor und Verbrennungsmotor verfügen. Das Fahrzeug weist dabei üblicherweise mehrere elektrische Kontakte auf, die zum Aufladen des fahrzeugseitigen Energiespeichers in Anlage bzw. in Kontakt mit elektrischen Gegenkontakten der jeweiligen Ladestation gebracht werden. Konkret weist das Fahrzeug üblicherweise einen, einen ersten Pol, beispielsweise einen Pluspol, bildenden ersten Leistungskontakt, einen, einen zweiten Pol, beispielsweise einen Minuspol, bildenden zweiten Leistungskontakt, einen Steuerkontakt und einen Potentialausgleichskontakt bzw. Erdungskontakt auf. Korrespondierend dazu weist die Ladestation einen ersten Leistungs-Gegenkontakt, einen zweiten Leistungs-Gegenkontakt, einen Steuer-Gegenkontakt und einen Potentialausgleichs-Gegenkontakt auf.

Zur Herstellung des Kontakts zwischen den fahrzeugseitigen Kontakten und den ladestationsseitigen Gegenkontakten ist es beispielsweise bekannt, ein die Gegenkontakte aufweisendes Gegenkontaktelement der Ladestation vertikal nach oben anzuheben, wenn die fahrzeugseitigen Kontakte starr bzw. unbeweglich im Unterbodenbereich des Fahrzeugs festgelegt sind. Für den Fall, dass die fahrzeugseitigen Kontakte unbeweglich im Dachbereich des Fahrzeugs festgelegt sind, kann zur Herstellung des Kontakts ein die Gegenkontakte aufweisendes Gegenkontaktelement der Ladestation abgesenkt bzw. vertikal nach unten verlagert werden. Ebenso ist es beispielsweise bekannt, ein die fahrzeugseitigen Kontakte aufweisendes, im Dachbereich des Fahrzeugs angeordnetes Kontaktelement des Fahrzeugs vertikal nach oben anzuheben, wenn die ladestationsseitigen Kontakte unbeweglich an der Ladestation festgelegt sind.

Die fahrzeugseitigen Kontakte und die ladestationsseitigen Gegenkontakte kommen dabei immer gleichzeitig miteinander in Anlage. Zudem kommen auch bei einem Lösen bzw. Unterbrechen der Kontakte durch Verlagerung des ladestationsseitigen Gegenkontaktelements bzw. des fahrzeugseitigen Kontaktelements in entgegengesetzer Richtung die fahrzeugseitigen Kontakte und die ladestationsseitigen Gegenkontakte immer gleichzeitig außer Anlage. Des Weiteren kommen bei den bekannten Systemen bzw. Vorrichtungen auch bei einem Lösen der Kontakte durch unbeabsichtigtes Wegrollen des Fahrzeugs ausgehend von einer Fahrzeug-Ladeposition vorwärts oder rückwärts die fahrzeugseitigen Kontakte und die ladestationsseitigen Gegenkontakte immer gleichzeitig außer Anlage.

Im Bereich der Anlagentechnik gibt es die Forderung (DIN VDE 0100), dass der Stromfluss bzw. Signalfluss zwischen elektrischen Komponenten in einer bestimmten Reihenfolge ermöglicht bzw. hergestellt und abgestellt bzw. unterbrochen werden soll. So soll zunächst der Stromfluss über die korrespondierenden Potentialausgleichskontakte ermöglicht, anschließend der Stromfluss über die korrespondierenden Leistungskontakte ermöglicht und schließlich der Signalfluss über die korrespondierenden Steuerkontakte hergestellt werden. Zudem soll zunächst der Signalfluss über die korrespondierenden Steuerkontakte abgestellt, anschließend der Stromfluss über die korrespondierenden Leistungskontakte unterbrochen und schließlich der Stromfluss über die korrespondierenden Potentialausgleichskontakte unterbrochen werden.

Aus der EP 3 115 248 A1 ist eine Vorrichtung zum Aufladen eines Energiespeichers mit einer fahrzeugseitigen Kontakteinrichtung bekannt. Die fahrzeugseitige Kontakteinrichtung ist mittels eines Arms in Richtung einer ladestationsseitigen Kontakteinrichtung verlagerbar. Die fahrzeugseitige Kontakteinrichtung hat zwei parallel zueinander ausgerichtete Schienen mit jeweils zwei Kontakten und die ladestationsseitige Kontakteinrichtung hat ebenfalls zwei parallel zueinander ausgerichtete Schienen mit jeweils zwei Kontakten.

Aufgabe der Erfindung ist es, eine Vorrichtung und ein Verfahren zum Aufladen eines elektrischen Energiespeichers, insbesondere einer Traktionsbatterie, eines einen elektrischen Antrieb aufweisenden Fahrzeugs bereitzustellen, mittels denen zuverlässig und effektiv sichergestellt wird, dass der Stromfluss bzw. Signalfluss zwischen den fahrzeugseitigen Kontakten und den ladestationsseitigen Gegenkontakten normgerecht bzw. gemäß DIN VDE 0100 hergestellt bzw. abgestellt wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung zum Aufladen eines elektrischen Energiespeichers, insbesondere einer Traktionsbatterie, eines einen elektrischen Antrieb aufweisenden Fahrzeugs, vorgeschlagen, mit einer dem Fahrzeug zugeordneten elektrischen Kontakteinrichtung, die einen, einen ersten Pol bildenden ersten Leistungskontakt, einen, einen zweiten Pol bildenden zweiten Leistungskontakt, einen Steuerkontakt und einen Potentialausgleichskontakt aufweist, und mit einer, einer Ladestation zugeordneten Gegenkontakteinrichtung, die zu den fahrzeugseitigen Kontakten korrespondierende Gegenkontakte aufweist. Erfindungsgemäß sind die fahrzeugseitige Kontakteinrichtung und die ladestationsseitige Gegenkontakteinrichtung derart ausgebildet, dass zum Herstellen des Kontakts zwischen den fahrzeugseitigen Kontakten und den ladestationsseitigen Gegenkontakten zuerst der fahrzeugseitige Potentialausgleichskontakt in Anlage mit einem ladestationsseitigen Potentialausgleichs-Gegenkontakt bringbar ist, anschließend die fahrzeugseitigen Leistungskontakte in Anlage mit ladestationsseitigen Leistungs-Gegenkontakten bringbar sind und schließlich der fahrzeugseitige Steuerkontakt in Anlage mit einem ladestationsseitigen Steuer-Gegenkontakt bringbar ist. Zusätzlich sind die fahrzeugseitige Kontakteinrichtung und die ladestationsseitige Gegenkontakteinrichtung erfindungsgemäß derart ausgebildet, dass zum Lösen des Kontakts zwischen den fahrzeugseitigen Kontakten und den ladestationsseitigen Gegenkontakten zunächst der fahrzeugseitige Steuerkontakt außer Anlage mit dem ladestationsseitigen Steuer-Gegenkontakt bringbar ist, anschließend die fahrzeugseitigen Leistungskontakt außer Anlage mit den ladestationsseitigen Leistungs-Gegenkontakten bringbar sind und schließlich der fahrzeugseitige Potentialausgleichskontakt außer Anlage mit dem ladestationsseitigen Potentialausgleichs-Gegenkontakt bringbar ist.

Auf diese Weise kann effektiv sichergestellt werden, dass der Stromfluss bzw. Signalfluss zwischen den fahrzeugseitigen Kontakten und den ladestationsseitigen Gegenkontakten normgerecht bzw. gemäß DIN VDE 0100 hergestellt bzw. abgestellt wird, da nun bei einem Herstellen des Kontakts zwischen den fahrzeugseitigen Kontakten und den ladestationsseitigen Gegenkontakten zunächst die korrespondierenden Potentialausgleichskontakte, anschließend die korrespondierenden Leistungskontakte und schließlich die korrespondierenden Steuerkontakte miteinander in Anlage bzw. in Kontakt gebracht werden können. Zusätzlich werden bei einem Lösen des Kontakts zwischen den fahrzeugseitigen Kontakten und den ladestationsseitigen Gegenkontakten nun zunächst die korrespondierenden Steuerkontakte, anschließend die korrespondierenden Leistungskontakte und schließlich die korrespondierenden Potentialausgleichskontakte außer Anlage bzw. außer Kontakt gebracht.

Erfindungsgemäß sind die fahrzeugseitigen Kontakte durch zwei, insbesondere stabförmige bzw. gerade und/oder in Fahrzeug-Längrichtung ausgerichtete, Kontaktschienen gebildet, um die fahrzeugseitige Kontakteinrichtung baulich einfach und funktionsoptimiert zu gestalten. Erfindungsgemäß ist dabei vorgesehen, dass jeder Kontaktschiene zwei Kontakte zugeordnet sind, um den Aufbau derfahrzeugseitigen Kontakteinrichtung weiter zu vereinfachen.

In einer bevorzugten Ausführungsvariante sind die fahrzeugseitigen Kontakte einem Kontaktelement des Fahrzeugs zugeordnet, das zum Herstellen des Kontakts zwischen den Kontakten des sich in der Ladeposition befindlichen Fahrzeugs und den ladestationsseitigen Gegenkontakten mittels einer fahrzeugseitigen Verlagerungseinrichtung, insbesondere in Vertikalrichtung, in Richtung der ladestationsseitigen Gegenkontakte verlagerbar ist. So kann der Kontakt zwischen den fahrzeugseitigen Kontakten und den ladestationsseitigen Gegenkontakten auf einfache und zuverlässige Weise wie gefordert hergestellt werden. Die fahrzeugseitigen Kontakte können dabei beispielsweise im Dachbereich oder im Unterbodenbereich des Fahrzeugs festgelegt sein.

Alternativ oder zusätzlich können die ladestationsseitigen Gegenkontakte einem Gegenkontaktelement der Ladestation zugeordnet sein, das zum Herstellen des Kontakts zwischen den Kontakten des sich in der Ladeposition befindlichen Fahrzeugs und den ladestationsseitigen Gegenkontakten mittels einer ladestationsseitigen Verlagerungseinrichtung, insbesondere in Vertikalrichtung, in Richtung der fahrzeugseitgen Kontakte verlagerbar ist. Die fahrzeugseitigen Kontakte können hier ebenfalls im Dachbereich oder im Unterbodenbereich des Fahrzeugs festgelegt sein.

Bevorzugt sind die fahrzeugseitige Kontakteinrichtung und die ladestationsseitige Gegenkontakteinrichtung derart ausgebildet, dass bei einer Verlagerung des fahrzeugseitigen Kontaktelements mittels der Verlagerungseinrichtung in Richtung der ladestationsseitigen Gegenkontakte zunächst der fahrzeugseitige Potentialausgleichskontakt in Anlage mit dem ladestationsseitigen Potentialausgleichs-Gegenkontakt kommt, anschließend die fahrzeugseitigen Leistungskontakte in Anlage mit den ladestationsseitigen Leistungs-Gegenkontakten kommen und schließlich der fahrzeugseitige Steuerkontakt in Anlage mit einem ladestationsseitigen Steuer-Gegenkontakt kommen. So wird zuverlässig effektiv und zuverlässig sichergestellt, dass die fahrzeugseitigen Kontakte in der geforderten Reihenfolge in Anlage mit den ladestationsseitigen Gegenkontaktelementen gebracht werden.

Vorteilhaft ist es weiter, wenn das fahrzeugseitige Kontaktelement zum Lösen des Kontakts zwischen den Kontakten des sich in der Ladeposition befindlichen Fahrzeugs und den ladestationsseitigen Gegenkontakten mittels der fahrzeugseitigen Verlagerungseinrichtung, insbesondere in Vertikalrichtung, weg von den ladestationsseitigen Gegenkontakten verlagerbar ist. So kann der Kontakt zwischen den zwischen den fahrzeugseitigen Kontakten und den ladestationsseitigen Gegenkontakten auf einfache und zuverlässige Weise wie gefordert gelöst werden.

Vorzugsweise sind die fahrzeugseitige Kontakteinrichtung und die ladestationsseitige Gegenkon-takteinrichtung dann derart ausgebildet, dass bei einer Verlagerung des fahrzeugseitigen Kontaktelements mittels der Verlagerungseinrichtung weg von den ladestationsseitigen Gegenkontakten zunächst der fahrzeugseitige Steuerkontakt außer Anlage mit dem ladestationsseitigen Steuer-Gegenkontakt kommt, anschließend die fahrzeugseitigen Leistungskontakte außer Anlage mit den ladestationsseitigen Leistungs-Gegenkontakten kommen und schließlich der fahrzeugseitige Potentialausgleichskontakt außer Anlage mit dem ladestationsseitigen Potentialausgleichs-Gegenkontakt kommt. So wird zuverlässig effektiv und zuverlässig sichergestellt, dass die fahrzeugseitigen Kontakte in der geforderten Reihenfolge außer Anlage mit den ladestationsseitigen Gegenkontaktelementen gebracht werden.

Erfindungsgemäß sind ein den Potentialausgleichs-Gegenkontakt bildender Potentialausgleichs-Gegenkontaktkörper und die Leistungs-Gegenkontakte bildende Leistungs-Gegenkontaktkörper mittels einer Fixiereinrichtung relativ zu einem, den Steuer-Gegenkontakt bildenden Steuer-Gegenkontaktkörper und relativ zueinander, insbesondere in Vertikalrichtung, verlagerbar an einem Aufnahmekörper der Ladestation festgelegt. Durch diese Verlagerbarkeit der Gegenkontaktkörper der Ladestation kann das Herstellen und Lösen des Kontakts zwischen den fahrzeugseitigen Kontakten und den ladestationsseitigen Kontakten in der geforderten Reihenfolge einfach und effektiv realisiert werden. Der Aufnahmekörper kann dabei beispielsweise durch einen, insbesondere bodenseitig festgelegten, Basiskörper der Ladestation oder durch einen mittels der ladestationsseitigen Verlagerungseinrichtung relativ zu einem, insbesondere bodenseitig festgelegten, Basiskörper der Ladestation verlagerbaren Fixierkörper gebildet sein.

In einer nicht von der Erfindung umfassten Ausführungsform könnte natürlich auch ein den Potentialausgleichskontakt bildender Potentialausgleichs-Kontaktkörper und die Leistungskontakte bildende Leistungs-Kontaktkörper mittels einer Fixiereinrichtung relativ zu einem, den Steuerkontakt bildenden Steuer-Kontaktkörper und relativ zueinander, insbesondere in Vertikalrichtung, verlagerbar an dem Fahrzeug festgelegt sein.

Vorteilhaft ist es weiter, wenn dem jeweiligen verlagerbaren Kontaktkörper der Ladestation wenigstens ein Spannelement, insbesondere ein Federelement, zugeordnet ist, das durch Verlagerung des jeweiligen Kontaktkörpers, insbesondere in Vertikalrichtung, hin zu dem Aufnahmekörper der Ladestation gespannt und durch Verlagerung des jeweiligen Kontaktkörpers, insbesondere in Vertikalrichtung, weg von dem Aufnahmekörper entspannt werden kann. Über derartige Spannelemente wird zuverlässig sichergestellt, dass sich die verlagerbare Kontaktkörper stets in einer definierten Grundposition relativ zu dem Aufnahmekörper befindet, wenn die fahrzeugseitigen Kontakte und die ladestationsseitigen Gegenkontakte nicht miteinander in Anlage sind. Zudem kann mittels der Spannelemente auch zuverlässig sichergestellt werden, dass sich die Kontakte in der geforderten Reihenfolge voneinander lösen.

Bevorzugt ist der maximale Federweg des dem Potentialausgleichs-Gegenkontaktkörper zugeordneten Federelements größer als der maximale Federweg der den Leistungs-Gegenkontaktkörpern zugeordneten Federelemente, um den Aufbau einfach und effektiv zu gestalten. Bevorzugt ist dabei auch der maximale Federweg der den Leistungs-Gegenkontaktkörpern zugeordneten Federelemente größer als der maximale Federweg des dem Steuer-Gegenkontaktkörper zugeordneten Federelements.

Vorzugsweise ist dem jeweiligen verlagerbaren Kontaktkörper der Ladestation wenigstens ein, insbesondere in Vertikalrichtung wirkendes, Stoßdämpferelement zugeordnet, mittels dem Bewegungsenergie des sich hin zu dem Aufnahmekörper der Ladestation bewegenden Kontaktkörpers abgebaut werden kann. Mittels eines derartigen Stoßdämpferelements wird der Kontakt zwischen den fahrzeugseitigen und den ladestationsseitigen Kontakten besonders zuverlässig sichergestellt.

Erfindungsgemäß ist in einem Nicht-Kontaktzustand, in dem alle ladestationseitigen Kontakte außer Anlage mit den korrespondierenden fahrzeugseitigen Kontakten sind, der Potentialausgleichs-Gegenkontakt, in Vertikalrichtung gesehen, in einer anderen Höhenposition als die Leistungs-Gegenkontakte angeordnet ist, wobei in dem Nicht-Kontaktzustand zudem die Leistungs-Gegenkontakte, in Vertikalrichtung gesehen, in einer anderen Höhenposition als der Steuer-Gegenkontakt angeordnet sind. Auf diese Weise kann einfach und effektiv erreicht werden, dass der Kontakt zwischen den fahrzeugseitigen Kontakten und den ladestationsseitigen Gegenkontakten in der geforderten Reihenfolge hergestellt und gelöst wird. Bevorzugt ist es dabei zudem, wenn in einem Kontaktzustand, in dem alle ladestationseitigen Kontakte in Anlage mit den korrespondierenden fahrzeugseitigen Kontakten sind, der Potentialausgleichskontakt, die Leistungskontakte und der Steuerkontakt des Fahrzeugs, in Vertikalrichtung gesehen, in derselben Höhenposition angeordnet sind.

Weiter bevorzugt sind die fahrzeugseitige Kontakteinrichtung und die ladestationsseitige Gegenkontakteinrichtung derart ausgebildet, dass bei einer Verlagerung des fahrzeugseitigen Kontaktelements in Richtung der ladestationsseitigen Gegenkontakte und/oder bei einer Verlagerung des ladestationsseitigen Gegenkontaktelements in Richtung der fahrzeugseitigen Kontakte die fahrzeugseitigen Kontakte in Anlage mit den ladestationsseitigen Gegenkontakten kommen und zumindest der Potentialausgleichs-Gegenkontaktkörper und die Leistungs-Gegenkontaktkörper, insbesondere auch der Steuer-Gegenkontaktkörper, insbesondere in Vertikalrichtung, hin zu dem Aufnahmekörper der Ladestation verlagert werden. So wird das Herstellen des Kontakts zwischen den fahrzeugseitigen Kontakten und den ladestationsseitigen Gegenkontakten in der geforderten Reihenfolge einfach und effektiv realisiert.

Des Weiteren wird auch ein Fahrzeug, insbesondere ein Nutzfahrzeug, mit der erfindungsgemäßen Vorrichtung beansprucht. Die sich hieraus ergebenden Vorteile sind identisch mit den bereits gewürdigten Vorteilen der erfindungsgemäßen Vorrichtung, so dass diese an dieser Stelle nicht wiederholt werden.

Zur Lösung der bereits genannten Aufgabe wird ferner ein Verfahren zum Aufladen eines elektrischen Energiespeichers, insbesondere einer Traktionsbatterie, eines einen elektrischen Antrieb aufweisenden Fahrzeugs beansprucht, wobei wenigstens eine dem Fahrzeug zugeordnete elektrische Kontakteinrichtung vorgesehen ist, die einen, einen ersten Pol bildenden ersten Leistungskontakt, einen, einen zweiten Pol bildenden zweiten Leistungskontakt, einen Steuerkontakt und einen Potentialausgleichskontakt aufweist, und mit einer, einer Ladestation zugeordneten Gegenkontakteinrichtung, die zu den fahrzeugseitigen Kontakten korrespondierende Gegenkontakte aufweist. Erfindungsgemäß ist vorgesehen, dass beim Herstellen eines Kontakts zwischen den fahrzeugseitigen Kontakten und zugeordneten ladestationsseitigen Gegenkontakten zunächst der fahrzeugseitige Potentialausgleichskontakt in Anlage mit einem ladestationsseitigen Potentialausgleich-Gegenkontakt gebracht wird, anschließend die fahrzeugseitigen Leistungskontakte in Anlage mit ladestationsseitigen Leistungs-Gegenkontakten gebracht werden und schließlich der fahrzeugseitige Steuerkontakt in Anlage mit einem ladestationsseitigen Steuer-Gegenkontakt gebracht wird. Zusätzlich ist erfindungsgemäß vorgesehen, dass beim Lösen eines Kontakts zwischen den fahrzeugseitigen Kontakten und zugeordneten ladestationsseitigen Gegenkontakten zunächst der fahrzeugseitige Steuerkontakt außer Anlage mit dem ladestationsseitigen Steuer-Gegenkontakt gebracht wird, anschließend die fahrzeugseitigen Leistungskontakte außer Anlage mit den ladestationsseitigen Leistungs-Gegenkontakten gebracht werden und schließlich der fahrzeugseitige Potentialausgleichskontakt außer Anlage mit dem ladestationsseitigen Potentialausgleichs-Gegenkontakt gebracht wird.

Die sich durch die erfindungsgemäße Verfahrensführung ergebenden Vorteile sind ebenfalls identisch mit den bereits gewürdigten Vorteilen der erfindungsgemäßen Vorrichtung, so dass diese an dieser Stelle ebenfalls nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:

Figur 1     in einer ersten Seitenansicht ein erfindungsgemäßes Fahrzeug in einer Ladeposition mit einem in einer Grundposition angeordneten Kontaktelement;

Figur 2     in einer zweiten Seitenansicht das Fahrzeug in der Ladeposition mit dem Kontaktelement in der Grundposition;

Figur 3     in einer Darstellung gemäß Figur 1 das fahrzeugseitige Kontaktelement in einer mittleren Höhenposition;

Figur 4     in einer Darstellung gemäß Figur 2 das fahrzeugseitige Kontaktelement in der mittleren Höhenposition;

Figur 5     in einer Darstellung gemäß Figur 2 das fahrzeugseitige Kontaktelement in einer oberen Höhenposition;

Figur 6     in einer schematischen Darstellung von oben das Kontaktelement des in der Ladeposition befindlichen Fahrzeugs und ladestationsseitige Gegenkontaktschienen; und

Figur 7     in einer Darstellung gemäß Figur 1 eine zweite Ausführungsform einer erfindungsgemäßen Vorrichtung.

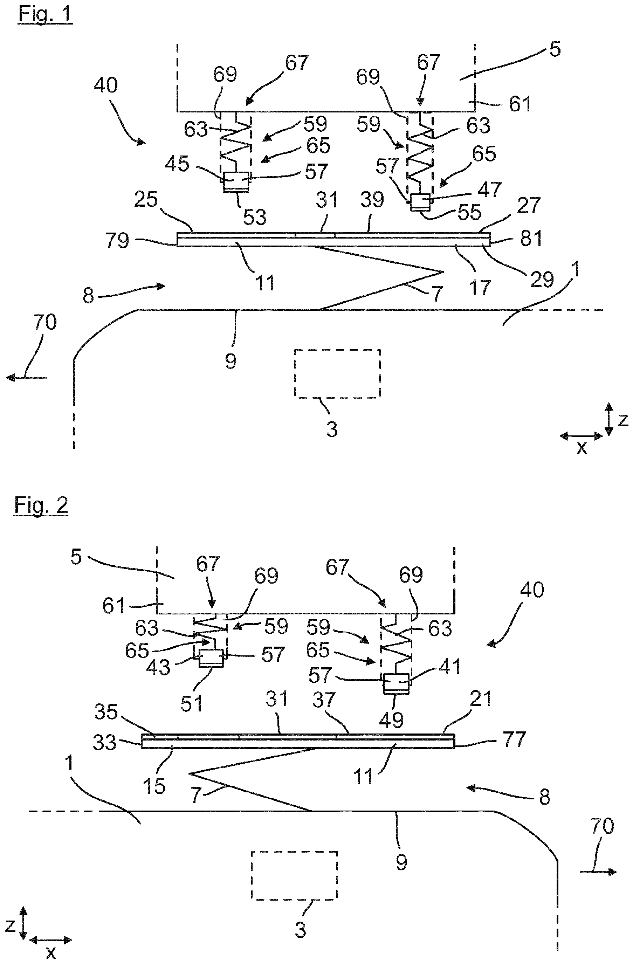

In Figur 1 ist ein Teil eines Fahrzeugs 1 in einer ersten Seitenansicht gezeigt. Das Fahrzeug 1 weist einen elektrischen Antrieb mit einem in Figur 1 schematisch angedeuteten elektrischen Energiespeicher 3, insbesondere einer Traktionsbatterie, auf und kann beispielsweise durch einen Omnibus oder durch einen Lastkraftwagen gebildet sein. Der elektrische Antrieb des Fahrzeugs 1 kann beispielsweise durch einen rein elektrischen Antrieb oder durch einen Hybridantrieb mit Elektromotor und Verbrennungsmotor gebildet sein. Bei der Darstellung gemäß Figur 1 befindet sich das Fahrzeug 1 in einer definierten Ladeposition, in der der elektrische Energiespeicher 3 des Fahrzeugs 1 mittels einer in Figur 1 teilweise gezeigten Ladestation 5 aufgeladen werden kann.

Die Ladestation 5 kann insgesamt beispielsweise im Wesentlichen I- oder L-förmig ausgebildet sein, wobei dann ein Endbereich der Ladestation starr bzw. unbeweglich am Boden befestigt ist und der andere Endbereich der Ladestation vom Boden beabstandet ist und den in Figur 1 gezeigten Aufbau aufweist.

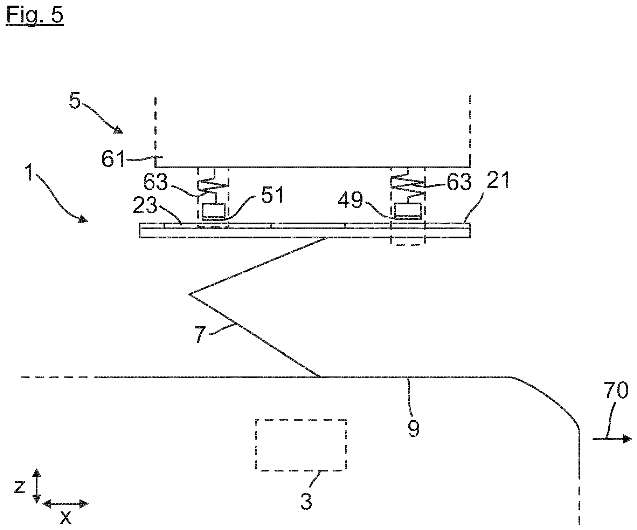

Wie in Figur 1 weiter gezeigt ist, weist das Fahrzeug 1 hier beispielhaft im Dachbereich eine Kontakteinrichtung 8 mit einem mittels einer schematisch angedeuteten Verlagerungseinrichtung 7 relativ zu einem Fahrzeugdach 9 in Fahrzeug-Hochrichtung z bzw. in Vertikalrichtung verlagerbaren Kontaktelement 11 auf. Mittels der Verlagerungseinrichtung 7 kann das Kontaktelement 11 zwischen einer in Figur 1 gezeigten Grundposition bzw. unteren Höhenposition und einer in Figur 5 gezeigten oberen Höhenposition relativ zu dem Dach 9 des Fahrzeugs 1 in Fahrzeug-Hochrichtung z verlagert werden. Die Verlagerungseinrichtung 7 kann dabei beispielsweise durch einen elektrisch betätigbaren Hebelmechanismus gebildet sein.

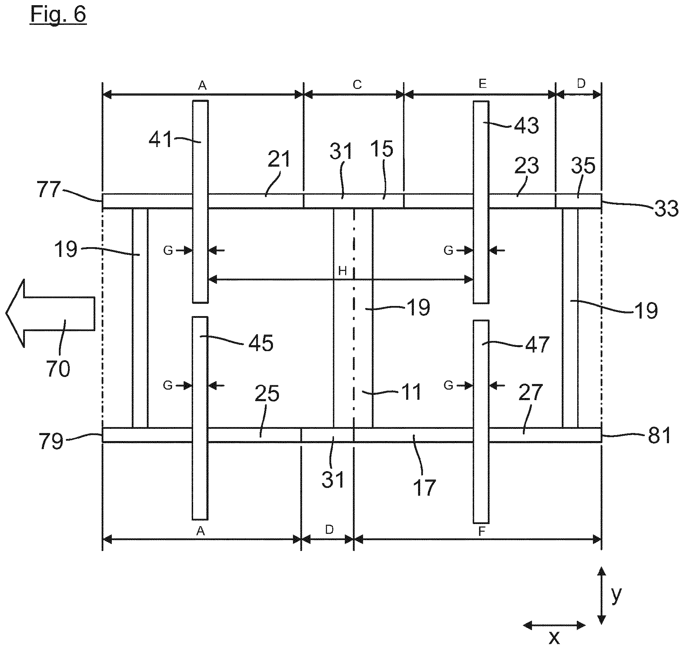

Wie aus der Ansicht von oben gemäß Figur 6 deutlicher hervorgeht, weist das fahrzeugseitige Kontaktelement 11 hier beispielhaft zwei im Wesentlichen stabförmige bzw. gerade in Fahrzeug-Längsrichtung x ausgerichtete sowie in Fahrzeug-Querrichtung y mit einem definierten Abstand voneinander beabstandete Kontaktschienen 15, 17 auf, die über mehrere Verbindungselemente 19 starr miteinander verbunden sind. Jeder Kontaktschiene 15, 17 sind hier zwei elektrische Kontakte zugeordnet. Die erste Kontaktschiene 15 weist hier beispielhaft einen, einen ersten Pol bildenden Leistungskontakt 21 und einen Steuerkontakt 23 auf. Die zweite Kontaktschiene 17 weist hier beispielhaft einen, einen zweiten Pol bildenden zweiten Leistungskontakt 25 und einen Potentialausgleichskontakt 27 auf.

Der erste Leistungskontakt 21 der in Fahrzeug-Längsrichtung x ausgerichteten ersten Kontaktschiene 15 ist hier dabei, in Fahrzeug-Längsrichtung x gesehen, vor dem Steuerkontakt 23 der ersten Kontaktschiene 15 angeordnet. Der zweite Leistungskontakt 25 der in Fahrzeug-Längsrichtung x ausgerichteten zweiten Kontaktschiene 17 ist hier, in Fahrzeug-Längsrichtung x gesehen, vor dem Potentialausgleichskontakt 27 der Kontaktschiene 17 angeordnet. Bei der in Figur 1 gezeigten ersten Seitenansicht des Fahrzeugs 1 ist hier nur die zweite Kontaktschiene 17 des fahrzeugseitigen Kontaktelements 11 ersichtlich. In Figur 2 ist das Fahrzeug 1 in einer zweiten Seitenansicht gezeigt, bei der die erste Kontaktschiene 15 des Fahrzeug 1 ersichtlich ist.

Wie aus Figur 1 und Figur 2 weiter hervorgeht, weist jede Kontaktschiene 15, 17 hier einen Trägerkörper 29 auf, an dem die jeweiligen Kontakte bzw. Kontaktteile festgelegt sind. Der Trägerkörper 29 ist hier aus einem elektrischen Isolationsmaterial gefertigt. Die beiden Kontakte der jeweiligen Kontaktschiene 15, 17 sind hier zudem, in Schienen-Längsrichtung bzw. in Fahrzeug-Längsrichtung x gesehen, jeweils mit einem definierten Längsabstand voneinander beabstandet. Zwischen den beiden Kontakte der jeweiligen Kontaktschiene 15, 17 ist ein elektrisches Isolationselement 31 aus einem elektrischen Isolationsmaterial angeordnet und, beispielsweise mittels einer Klebeverbindung, an dem Trägerkörper 29 festgelegt. Alternativ wäre es aber auch denkbar, dass das elektrische Isolationselement 31 und der Trägerkörper 29 materialeinheitlich und/oder einstückig miteinander verbunden sind bzw. einteilig gefertigt sind.

Gemäß Figur 2 ist hier zudem der Steuerkontakt 23 der ersten Kontaktschiene 15 von einer hinteren Stirnwand 33 der ersten Kontaktschiene 15 beabstandet. Zwischen dem Steuerkontakt 23 und der hinteren Stirnwand 33 der ersten Kontaktschiene 15 ist hier ebenfalls ein elektrisches Isolationselement 35 aus einem elektrischen Isolationsmaterial an dem Trägerkörper 29 der Kontaktschiene 15 festgelegt. Alternativ könnten auch das elektrische Isolationselement 35 und der Trägerkörper 29 materialeinheitlich und/oder einstückig miteinander verbunden sein.

Der erste Leistungskontakt 21, der Steuerkontakt 23 sowie die elektrischen Isolationselemente 31, 35 der ersten Kontaktschiene 15 sind hier zudem derart ausgebildet, dass eine, eine Anlagefläche bildende obere Wand 37 der ersten Kontaktschiene 15, mit der die erste Kontaktschiene 15 in Anlage mit der Ladestation 5 bringbar ist, durchgehend eben bzw. glatt, d.h. im Wesentlichen ohne Sprünge und Kanten, ausgebildet ist. Zudem sind der zweite Leistungskontakt 25, der Potentialausgleichskontakt 27 und das elektrische Isolationselement 31 der zweiten Kontaktschiene 17 hier ebenfalls derart ausgebildet, dass eine, eine Anlagefläche bildende obere Wand 39 der zweiten Kontaktschiene 17, mit der die zweite Kontaktschiene 17 in Anlage mit der Ladestation 5 gebracht werden kann, durchgehend eben bzw. glatt ist.

Des Weiteren sind die Kontaktschienen 15, 17 hier stets, d.h. auch während der Verlagerung des Kontaktelements 11 von der Grundposition in die obere Höhenposition und umgekehrt, im Wesentlichen parallel zu dem Dach 9 des Fahrzeugs 1 verlaufend ausgerichtet.

An dieser Stelle ist anzumerken, dass in den Figuren die Fahrzeug-Längsrichtung x der Ladestation-Längsrichtung, die Fahrzeug-Querrichtung y der Ladestation-Querrichtung und die Fahrzeug-Hochrichtung z der Ladestation-Hochrichtung entspricht.

Wie weiter in Figur 6 gezeigt ist, weist die Ladestation 5 hier beispielhaft vier in Ladestation-Querrichtung y ausgerichtete Gegenkontaktschienen 41, 43, 45, 47 auf, die Bestandteil einer Gegenkontakteinrichtung 40 (Fig. 1) der Ladestation 5 sind. Die Gegenkontaktschiene 41 bildet hier dabei einen ersten Leistungs-Gegenkontakt 49 (Figur 2) aus, während die in Ladestation-Längsrichtung x gesehen, hinter der Gegenkontaktschiene 41 angeordnete Gegenkontaktschiene 43 einen Steuer-Gegenkontakt 51 (Figur 2) ausbildet. Die Gegenkontaktschiene 45 bildet einen zweiten Leistungs-Gegenkontakt 53 (Figur 1) aus, während die, in Ladestation-Längsrichtung x gesehen, hinter der Gegenkontaktschiene 45 angeordnete Gegenkontaktschiene 47 einen Potentialausgleichs-Gegenkontakt 55 (Figur 1) ausbildet. Die vorderen Gegenkontaktschienen 41, 45 sind hier zudem in Ladestation-Querrichtung y zueinander fluchtend angeordnet. Die hinteren Gegenkontaktschienen 43, 47 sind hier ebenfalls in Ladestation-Querrichtung y zueinander fluchtend angeordnet.

Wie weiter aus den Figuren 1 und 2 hervorgeht, weist jede Kontaktschiene 41, 43, 45, 47 hier beispielhaft einen Trägerkörper 57 auf, an dem der jeweilige Gegenkontakt bzw. das jeweilige Gegenkontaktteil 49, 51, 53, 55 angebracht bzw. festgelegt ist. Zudem ist hier jede Gegenkontaktschiene 41, 43, 45, 47 mittels einer schematisch angedeuteten Fixiereinrichtung 59 relativ zu einem bodenseitig festgelegten Basiskörper bzw. Trägerkörper 61 der Ladestation 5 in Vertikalrichtung verlagerbar an dem Basiskörper 61 festgelegt, dergestalt, dass die Gegenkontaktschienen 41, 43, 45, 47 auch relativ zueinander in Vertikalrichtung verlagert werden können.

Jede Fixiereinrichtung 59 ist hier beispielhaft durch ein in Vertikalrichtung wirkendes Federelement 63 gebildet, das mit einem Verbindungsbereich 65 mit der jeweiligen Gegenkontaktschiene 41, 43, 45, 47 und mit einem anderen Verbindungsbereich 67 mit dem Basiskörper 61 der Ladestation 5 verbunden ist. Zudem weist jede Fixiereinrichtung 59 hier auch einen mit gestrichelten Linien angedeutete Führung 69 auf, mit der die jeweilige Gegenkontaktschiene 41, 43, 45, 47 quer zur Vertikalrichtung geführt wird, dergestalt, dass sich die jeweilige Gegenkontaktschiene 41, 43, 45, 47 nicht verdrehen und nur in Vertikalrichtung relativ zur dem Grundkörper 61 der Ladestastion 5 verlagert werden kann. Optional kann der jeweiligen Gegenkontaktschiene 41, 43, 45, 47 zudem ein hier nicht gezeigtes, in Vertikalrichtung wirkendes Stoßdämpferelement zugeordnet sein, mittels dem Bewegungsenergie der jeweiligen sich hin zu dem Aufnahmekörper 61 bewegenden Gegenkontaktschiene 41, 43, 45, 47 abgebaut werden kann.

Des Weiteren befindet sich in dem in Figur 1 und 2 gezeigten Nicht-Kontaktzustand, in dem das Kontaktelement 11 des Fahrzeugs 1 und die Gegenkontaktschienen 41, 43, 45, 47 nicht miteinander in Anlage sind, jede Gegenkontaktschiene 41, 43, 45, 47 in einer definierten Grundposition. Dabei befindet sich der Potentialausgleichs-Gegenkontakt 55 in Vertikalrichtung unterhalb der Leistungs-Gegenkontakte 49, 53. Die Leistungs-Gegenkontakte 49, 53 befinden sich im Wesentlichen in einer identischen Höhenposition. Der Steuer-Gegenkontakt 51 befindet sich in Vertikalrichtung oberhalb der Leistungs-Gegenkontakte 49, 53.

Zur Herstellung des Kontakts zwischen den fahrzeugseitigen Kontakten 21, 23, 25, 27 und den ladestationsseitigen Gegenkontakten 49, 51, 53, 55 wird das Fahrzeug 1 zunächst in eine definierte Ladeposition relativ zu der Ladestation 5 gefahren. Anschließend wird das Kontaktelement 11 mittels der Verlagerungseinrichtung 7 von der in Fig. 1 und Fig. 2 gezeigten Grundposition in die in Figur 5 gezeigte obere Höhenposition angehoben bzw. vertikal nach oben verlagert. Bei diesem Anheben des Kontaktelements 11 kommt zunächst der fahrzeugseitige Potentialausgleichskontakt 27 in Anlage mit dem ladestationsseitigen Potentialausgleichs-Gegenkontakt 55 und das Kontaktelement 11 verlagert die den Potentialausgleichs-Gegenkontakt 55 bildende Gegenkontaktschiene 47 unter Spannung des zugeordneten Federelements 63 vertikal nach oben.

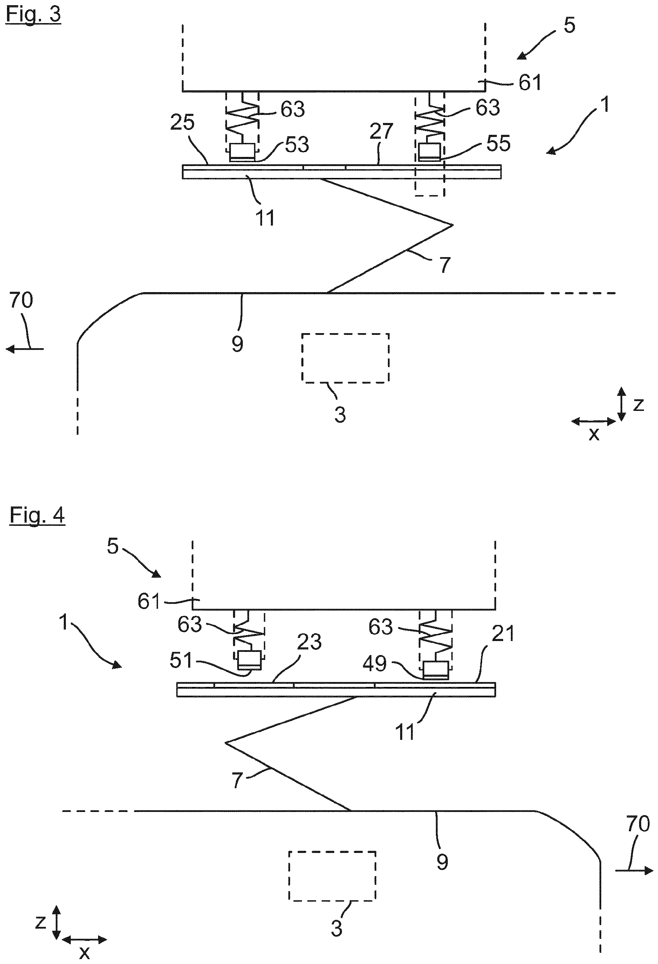

Wie in Figur 3 und Figur 4 gezeigt ist, kommen dann bei weiterer Verlagerung des Kontaktelements 11 nach oben die Leistungskontakte 21, 25 des Kontaktelements 11 in Anlage mit den Leistungs-Gegenkontakten 49, 53 der Ladestation 5. Die die Leistungs-Gegenkontakte 49, 53 bildenden Gegenkontaktschienen 41, 45 werden dann zusammen mit der Gegenkontaktschiene 47 unter Spannung der jeweiligen Federelemente 63 von dem Kontaktelement 11 des Fahrzeugs 1 nach oben verlagert. Bei weiterer Verlagerung des Kontaktelements 11 nach oben kommt dann auch der fahrzeugseitige Steuerkontakt 23 in Anlage mit dem ladestationsseitigen Steuer-Gegenkontakt 51. Schließlich werden dann alle Gegenkontakteschienen 41, 43, 45, 47 unter Spannung der Federelemente 63 der Ladestation 5 mittels des Kontaktelements 11 angehoben, bis sich das Kontaktelement 11 in der in Figur 5 gezeigten oberen Höhenposition befindet.

Zum Lösen des Kontakts zwischen den fahrzeugseitigen Kontakten 21, 23, 25, 27 und den ladestationsseitigen Kontakten 49, 51, 53, 55 wird das Kontaktelement 11 dann wieder von der oberen Höhenposition in die in den Figuren 1 und 2 untere Grundposition verlagert, wobei die Kontakte hier dann in umgekehrter Reihenfolge außer Anlage kommen.

Des Weiteren sind die Kontakte 21, 23, 25, 27 des Fahrzeugs 1 hier auch derart angeordnet und ausgebildet, dass ausgehend von einem Kontaktzustand, in dem jeder fahrzeugseitige Kontakt 21, 23, 25, 27 in Anlage mit dem korrespondierenden ladestationsseitigen Gegenkontakt 49, 51, 53, 55 ist, bei einer Bewegung des Fahrzeugs 1 vorwärts und rückwärts zunächst der fahrzeugseitige Steuerkontakt 23 außer Anlage mit dem ladestationsseitigen Steuer-Gegenkontakt 51 kommt, anschließend die fahrzeugseitigen Leistungskontakte 21, 25 außer Anlage mit den ladestationsseitigen Leistungs-Gegenkontakten 49, 53 kommen und schließlich der fahrzeugseitige Potentialausgleichskontakt 27 außer Anlage mit dem ladestationsseitigen Potentialausgleichs-Gegenkontakt 55 kommt.

Um ein derartiges Lösen der Kontakte bei einer Bewegung des Fahrzeugs 1 vorwärts bzw. in Fahrtrichtung 70 (Fig. 6) und rückwärts bzw. entgegen der Fahrtrichtung 70 zu realisieren, weist der fahrzeugseitige Steuerkontakt 23 hier, in Fahrzeug-Längsrichtung x gesehen, eine geringere Länge auf als die fahrzeugseitigen Leistungskontakte 21, 25 (siehe hierzu Fig. 6). Zudem weisen hier auch die Leistungskontakte 21, 25 des Fahrzeugs 1 eine geringere Länge auf als der fahrzeugseitige Potentialausgleichskontakt 27. Die fahrzeugseitigen Leistungskontakte 21, 25 weisen hier beispielhaft eine identische Länge auf.

Ausgehend von einer Breite G der Gegenkontakte, eines Sicherheitsabstands S und eines Schienenabstands H zwischen den vorderen Gegenkontaktschienen 41, 45 und den hinteren Gegenkontaktschienen 43, 47 als vorgegebene Parameter sind eine Länge des Potentialausgleichskontakts F, ein erster Längsabstand C zwischen den zwei Kontakten der ersten Kontaktschiene 15, ein zweiter Längsabstand D zwischen den zwei Kontakten der zweiten Kontaktschiene 17, eine Länge E des Steuerkontakts 23 des Fahrzeugs 1 und die Länge A der Leistungskontakte 21, 25 des Fahrzeugs 1 hier dabei gemäß den folgenden Formeln ausgebildet:

$$F = H - G; \quad D = G + S; \quad C = 2 \times D; \quad E = F - 2 \times D; \quad A = F - D; \quad A = H - 2 \times G - S$$

Auf diese Weise wird ausgehend von der Breite G der Gegenkontakte 49, 51, 53, 55, des Sicherheitsabstands S und des Schienenabstands H als vorgegebene Parameter zuverlässig sichergestellt, dass sich die Kontakte in der genannten Weise voneinander lösen, wenn sich das Fahrzeug 1 ausgehend von einer Ladeposition vorwärts und rückwärts bewegt. Dies wird hier für alle möglichen Ladepositionen des Fahrzeugs 1 relativ zu der Ladestation 5 gewährleistet, in denen der Kontaktzutand hergestellt werden kann. Der Sicherheitsabstand S ist hier dabei durch das Produkt aus einer vorgegebenen minimalen Kriechstrecke und einem individuellen Sicherheitsfaktor gebildet. Die minimale Kriechstrecke kann dabei beispielsweise gemäß den Normen DIN_EN_50124 (VDE0115-107-1) oder IEC60664 ausgeführt sein, so dass sie je nach Anwendungsfall normgerecht bemessen ist. Der Sicherheitsfaktor kann in Abhängigkeit vom Anwendungsfall gewählt werden und kann beispielsweise in einem Bereich von 1 bis 10, insbesondere in einem Bereich von 1 bis 3, liegen.

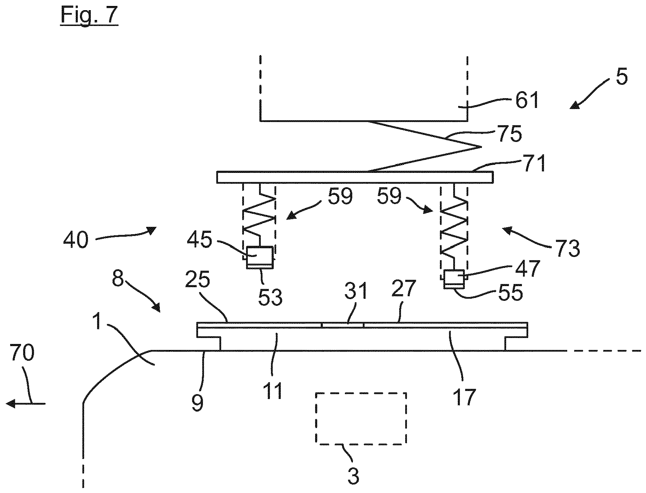

In Figur 7 ist eine zweite Ausführungsform einer erfindungsgemäßen Vorrichtung gezeigt. Im Vergleich zu der in Figur 1 gezeigten ersten Ausführungsform sind die fahrzeugseitigen Kontaktschienen 15, 17 hier starr bzw. unbeweglich an dem Fahrzeug 1 festgelegt. Zudem sind die Gegenkontaktschienen 41, 43, 45, 47 hier über die jeweilige Fixiereinrichtung 59 an einem im Wesentlichen plattenförmigen Fixierkörper 71 der Ladestation 5 festgelegt. Der Fixierkörper 71 und die Gegenkontaktschienen 41, 43, 45 47 bilden hier dabei ein Gegenkontaktelement 73, das in Vertikalrichtung relativ zu dem Basiskörper 61 der Ladestation 5 verlagerbar an dem Basiskörper 61 der Ladestation 5 festgelegt ist. Das Gegenkontaktelement 73 kann hier dabei mittels einer in Figur 7 schematisch angedeuteten Verlagerungseinrichtung 75 vertikal verlagert werden, die ebenfalls durch einen elektrisch betätigbaren Hebelmechanismus gebildet sein kann.

**Bezugszeichenliste**

| | |
|---|---|
| 1 | Fahrzeug |
| 3 | elektrischer Energiespeicher |
| 5 | Ladestation |
| 7 | Verlagerungseinrichtung |
| 8 | Kontakteinrichtung |
| 9 | Dach |
| 11 | Kontaktelement |
| 15 | Kontaktschiene |
| 17 | Kontaktschiene |
| 19 | Verbindungselement |
| 21 | erster Leistungskontakt |
| 23 | Steuerkontakt |
| 25 | zweiter Leistungskontakt |
| 27 | Potentialausgleichskontakt |
| 29 | Trägerkörper |
| 31 | elektrisches Isolationselement |
| 33 | hintere Stirnwand |
| 35 | elektrisches Isolationselement |
| 37 | obere Wand |
| 39 | obere Wand |
| 40 | Gegen-Kontakteinrichtung |
| 41 | Gegenkontaktschiene |
| 43 | Gegenkontaktschiene |
| 45 | Gegenkontaktschiene |
| 47 | Gegenkontaktschiene |
| 49 | erster Leistungs-Gegenkontakt |
| 51 | Steuer-Gegenkontakt |
| 53 | zweiter Leistungs-Gegenkontakt |
| 55 | Potentialausgleichs-Gegenkontakt |
| 57 | Trägerkörper |
| 59 | Fixiereinrichtung |
| 61 | Basiskörper |
| 63 | Federelement |
| 65 | Verbindungsbereich |
| 67 | Verbindungsbereich |
| 69 | Führung |
| 70 | Fahrtrichtung |
| 71 | Fixierkörper |
| 73 | Gegenkontaktelement |
| 75 | Verlagerungseinrichtung |

**Patentansprüche**

**1.** Vorrichtung zum Aufladen eines elektrischen Energiespeichers eines einen elektrischen Antrieb aufweisenden Fahrzeugs, mit einer dem Fahrzeug (1) zugeordneten elektrischen Kontakteinrichtung (8), die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation zugeordneten Gegenkontakteinrichtung, die zu den fahrzeugseitigen Kontakten korrespondierende Gegenkontakte (49, 51, 53, 55) aufweist,

wobei die fahrzeugseitigen Kontakte (21, 23, 25, 27) durch zwei in Fahrzeug-Längsrichtung ausgerichtete Kontaktschienen (15, 17) gebildet sind, wobei jeder Kontaktschiene (15, 17) zwei Kontakte (21, 23, 25, 27) zugeordnet sind,

wobei in einem Nicht-Kontaktzustand der Potentialausgleichs-Gegenkontakt (55), in Vertikalrichtung gesehen, in einer anderen Höhenposition als die Leistungs-Gegenkontakte (49, 53) angeordnet ist, und wobei in dem Nicht-Kontaktzustand die Leistungs-Gegenkontakte (49, 53), in Vertikalrichtung gesehen, in einer anderen Höhenposition als der Steuer-Gegenkontakt (51) angeordnet sind,

wobei ein den Potentialausgleichs-Gegenkontakt (55) bildender Potentialausgleichs-Gegenkontaktkörper (47) und die Leistungs-Gegenkontakte (49, 53) bildende Leistungs-Gegenkontaktkörper (41, 45) mittels einer Fixiereinrichtung (59) relativ zu einem den Steuer-Gegenkontakt (51) bildenden Steuer-Gegenkontaktkörper (43) und relativ zueinander, in Vertikalrichtung verlagerbar an einem Aufnahmekörper (61) der Ladestation (5) festgelegt sind, und

wobei die fahrzeugseitige Kontakteinrichtung (8) und die ladestationsseitige Gegenkontakteinrichtung (40) derart ausgebildet sind,

dass zum Herstellen des Kontakts zwischen den fahrzeugseitigen Kontakten (21, 23, 25, 27) und den ladestationsseitigen Gegenkontakten (49, 51, 53, 55) zunächst der fahrzeugseitige Potentialausgleichskontakt (27) in Anlage mit einem ladestationsseitigen Potentialausgleichs-Gegenkontakt (55) bringbar ist, anschließend die fahrzeugseitigen Leistungskontakte (21, 25) in Anlage mit ladestationsseitigen Leistungs-Gegenkontakten (49, 53) bringbar sind und schließlich der fahrzeugseitige Steuerkontakt (23) in Anlage mit einem ladestationsseitigen Steuer-Gegenkontakt (51) bringbar ist, und

dass zum Lösen des Kontakts zwischen den fahrzeugseitigen Kontakten (21, 23, 25, 27) und den ladestationsseitigen Gegenkontakten (49, 51, 53, 55) zunächst der fahrzeugseitige Steuerkontakt (23) außer Anlage mit dem ladestationsseitigen Steuer-Gegenkontakt (51) bringbar ist, anschließend die fahrzeugseitigen Leistungskontakte (21, 25) außer Anlage mit den ladestationsseitigen Leistungs-Gegenkontakten (49, 53) bringbar sind und schließlich der fahrzeugseitige Potentialausgleichskontakt (27) außer Anlage mit dem ladestationsseitigen Potentialausgleichs-Gegenkontakt (55) bringbar ist.

2. Vorrichtung nach Anspruch 1, **dadurch gekennzeichnet, dass** die fahrzeugseitigen Kontakte einem Kontaktelement (11) des Fahrzeugs (1) zugeordnet sind, das zum Herstellen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels einer fahrzeugseitigen Verlagerungseinrichtung (7), insbesondere in Vertikalrichtung, in Richtung der ladestationsseitigen Gegenkontakte (49, 51, 53, 55) verlagerbar ist.

3. Vorrichtung nach Anspruch 2, **dadurch gekennzeichnet, dass** die fahrzeugseitige Kontakteinrichtung (8) und die ladestationsseitige Gegenkontakteinrichtung (40) derart ausgebildet sind, dass bei einer Verlagerung des fahrzeugseitigen Kontaktelements (11) mittels der Verlagerungseinrichtung (7) in Richtung der ladestationsseitigen Gegenkontakte (49, 51, 53, 55) zunächst der fahrzeugseitige Potentialausgleichskontakt (27) in Anlage mit dem ladestationsseitigen Potentialausgleichs-Gegenkontakt (55) kommt, anschließend die fahrzeugseitigen Leistungskontakte (21, 25) in Anlage mit den ladestationsseitigen Leistungs-Gegenkontakten (49, 53) kommen und schließlich der fahrzeugseitige Steuerkontakt (23) in Anlage mit einem ladestationsseitigen Steuer-Gegenkontakt (51) kommen.

4. Vorrichtung nach Anspruch 2 oder 3, **dadurch gekennzeichnet, dass** das fahrzeugseitige Kontaktelement (11) zum Lösen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels der fahrzeugseitigen Verlagerungseinrichtung (7), insbesondere in Vertikalrichtung, weg von den ladestationsseitigen Gegenkontakten (49, 51, 53, 55) verlagerbar ist.

5. Vorrichtung nach Anspruch 4, **dadurch gekennzeichnet, dass** die fahrzeugseitige Kontakteinrichtung (8) und die ladestationsseitige Gegenkontakteinrichtung (40) derart ausgebildet sind, dass bei einer Verlagerung des fahrzeugseitigen Kontaktelements (11) mittels der Verlagerungseinrichtung (7) weg von den ladestationsseitigen Gegenkontakten (49, 51, 53, 55) zunächst der fahrzeugseitige Steuerkontakt (23) außer Anlage mit dem ladestationsseitigen Steuer-Gegenkontakt (51) kommt, anschließend die fahrzeugseitigen Leistungskontakte (21, 25) außer Anlage mit den ladestationsseitigen Leistungs-Gegenkontakten (49, 53) kommen und schließlich der fahrzeugseitige Potentialausgleichskontakt (27) außer Anlage mit dem ladestationsseitigen Potentialausgleichs-Gegenkontakt (55) kommt.

6. Vorrichtung nach einem der vorhergehenden Ansprüchen, **dadurch gekennzeichnet, dass** der Aufnahmekörper (61) durch einen bodenseitig festgelegten Basiskörper (61) der Ladestation (5) gebildet ist.

7. Vorrichtung nach einem der vorhergehenden Ansprüche, **dadurch gekennzeichnet, dass** dem jeweiligen verlagerbaren Kontaktkörper (43, 45, 47) der Ladestation (5) wenigstens ein Spannelement (63), insbesondere ein Federelement, zugeordnet ist, das durch Verlagerung des jeweiligen Kontaktkörpers (43, 45, 47), insbesondere in Vertikalrichtung, hin zu dem Aufnahmekörper (61) spannbar und durch Verlagerung des jeweiligen Kontaktkörpers (43, 45, 47), insbesondere in Vertikalrichtung, weg von dem Aufnahmekörper (61) entspannbar ist.

8. Vorrichtung nach Anspruch 7, **dadurch gekennzeichnet, dass** der maximale Federweg des dem Potentialausgleichs-Gegenkontaktkörper (47) zugeordneten Federelements (63) größer ist als der maximale Federweg der den Leistungs-Gegenkontaktkörpern (41, 45) zugeordneten Federelemente (63), wobei bevorzugt vorgesehen ist, dass der maximale Federweg der den Leistungs-Gegenkontaktkörpern (41, 45) zugeordneten Federelemente (63) größer ist der maximale Federweg des dem Steuer-Gegenkontaktkörper (43) zugeordneten Federelements (63).

9. Vorrichtung nach einem der Ansprüche 6 bis 8, **dadurch gekennzeichnet, dass** die fahrzeugseitige Kontakteinrichtung (8) und die ladestationsseitige Gegenkontakteinrichtung (40) derart ausgebildet sind, dass bei einer Verlagerung des fahrzeugseitigen Kontaktelements (11) in Richtung der ladestationsseitigen Gegenkontakte (49, 51, 53, 55) die fahrzeugseitigen Kontakte in Anlage mit den ladestationsseitigen Gegenkontakten kommen und zumindest der Potentialausgleichs-Gegenkontaktkörper (47) und die Leistungs-Gegenkontaktkörper (41, 45), insbesondere auch der Steuer-Gegenkontaktkörper (43), hin zu dem Aufnahmekörper (61) der Ladestation (5) verlagert werden.

10. Vorrichtung nach Anspruch 1, **dadurch gekennzeichnet, dass** die ladestationsseitigen Gegenkontakte (49, 51, 53, 55) einem Gegenkontaktelement (73) der Ladestation (5) zugeordnet sind, das zum Herstellen des Kontakts zwischen den Kontakten (21, 23, 25, 27) des sich in der Ladeposition befindlichen Fahrzeugs (1) und den ladestationsseitigen Gegenkontakten (49, 51, 53, 55) mittels einer ladestationsseitigen Verlagerungseinrichtung (75), insbesondere in Vertikalrichtung, in Richtung der fahrzeugseitigen Kontakte (21 bis 27) verlagerbar ist.

11. Vorrichtung nach Anspruch 10, **dadurch gekennzeichnet, dass** der Aufnahmekörper (61) durch einen mittels der ladestationsseitigen Verlagerungseinrichtung (7; 71) relativ zu einem bodenseitig festgelegten Basiskörper (61) der Ladestation verlagerbaren Fixierkörper (71) gebildet ist.

12. Fahrzeug, insbesondere Nutzfahrzeug, mit einer Vorrichtung nach einem der Ansprüche 1 bis 11.

13. Verfahren zum Aufladen eines elektrischen Energiespeichers eines einen elektrischen Antrieb aufweisenden Fahrzeugs zum Betreiben einer Vorrichtung nach einem der Ansprüche 1 bis 11, wobei eine dem Fahrzeug (1) zugeordnete elektrische Kontakteinrichtung (8) vorgesehen ist, die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation zugeordneten Gegenkontakteinrichtung, die zu den fahrzeugseitigen Kontakten korrespondierende Gegenkontakte aufweist,

wobei die fahrzeugseitigen Kontakte (21 bis 27) durch zwei in Fahrzeug-Längsrichtung ausgerichtete Kontaktschienen (15, 17) gebildet sind, wobei jeder Kontaktschiene (15, 17) zwei Kontakte (21 bis 27) zugeordnet sind, wobei in einem Nicht-Kontaktzustand der Potentialausgleichs-Gegenkontakt (55), in Vertikalrichtung gesehen, in einer anderen Höhenposition als die Leistungs-Gegenkontakte (49, 53) angeordnet ist, und wobei in dem Nicht-Kontaktzustand die Leistungs-Gegenkontakte (49, 53), in Vertikalrichtung gesehen, in einer anderen Höhenposition als der Steuer-Gegenkontakt (51) angeordnet sind, wobei ein den Potentialausgleichs-Gegenkontakt (55) bildender Potentialausgleichs-Gegenkontaktkörper (47) und die Leistungs-Gegenkontakte (49, 53) bildende Leistungs-Gegenkontaktkörper (41, 45) mittels einer Fixiereinrichtung (59) relativ zu einem den Steuer-Gegenkontakt (51) bildenden Steuer-Gegenkontaktkörper (43) und relativ zueinander, in Vertikalrichtung verlagerbar an einem Aufnahmekörper (61) der Ladestation (5) festgelegt sind, und wobei beim Herstellen eines Kontakts zwischen den fahrzeugseitigen Kontakten (21, 23, 25, 27) und zugeordneten ladestationsseitigen Gegenkontakten (49, 51, 53, 55) zunächst der fahrzeugseitige Potentialausgleichskontakt (27) in Anlage mit einem ladestationsseitigen Potentialausgleichs-Gegenkontakt (55) gebracht wird, anschließend die fahrzeugseitigen Leistungskontakte (21, 25) in Anlage mit ladestationsseitigen Leistungs-Gegenkontakten (49, 53) gebracht werden und schließlich der fahrzeugseitige Steuerkontakt (23) in Anlage mit einem ladestationsseitigen Steuer-Gegenkontakt (51) gebracht werden, und

wobei beim Lösen eines Kontakts zwischen den fahrzeugseitigen Kontakten (21, 23, 25, 27) und zugeordneten ladestationsseitigen Gegenkontakten (49, 51, 53, 55) zunächst der fahrzeugseitige Steuerkontakt (23) außer Anlage mit dem ladestationsseitigen Steuer-Gegenkontakt (51) gebracht wird, anschließend die fahrzeugseitigen Leistungskontakte (21, 25) außer Anlage mit den ladestationsseitigen Leistungs-Gegenkontakten (49, 53) gebracht werden und schließlich der fahrzeugseitige Potentialausgleichskontakt (27) au-βer Anlage mit dem ladestationsseitigen Potentialausgleichs-Gegenkontakt (55) gebracht wird.

## Claims

1. Device for charging an electrical energy store of a vehicle having an electrical drive, comprising an electrical contact apparatus (8) that is assigned to the vehicle (1) and has a first power contact (21) forming a first pole, a second power contact (25) forming a second pole, a control contact (23) and a potential equalization contact (27), and comprising a mating contact apparatus that is assigned to a charging station and has mating contacts (49, 51, 53, 55) corresponding to the vehicle-side contacts,

   wherein the vehicle-side contacts (21, 23, 25, 27) are formed by two contact rails (15, 17) that are oriented in the vehicle longitudinal direction, wherein two contacts (21, 23, 25, 27) are assigned to each contact rail (15, 17), wherein, in a non-contact state, the mating potential equalization contact (55) is arranged at a different height position to the mating power contacts (49, 53), as seen in the vertical direction, and wherein, in the non-contact state, the mating power contacts (49, 53) are arranged at a different height position to the mating control contact (51), as seen in the vertical direction,
   wherein a mating potential equalization contact body (47) forming the mating potential equalization contact (55) and mating power contact bodies (41, 45) forming the mating power contacts (49, 53) are fixed on a receiving body (61) of the charging station (5), so as to be displaceable in the vertical direction, relative to a mating control contact body (43) forming the mating control contact (51) and relative to one another by means of a fixing apparatus (59), and
   wherein the vehicle-side contact apparatus (8) and the charging-station-side mating contact apparatus (40) are designed in such a way
   that, in order to produce the contact between the vehicle-side contacts (21, 23, 25, 27) and the charging-station-side mating contacts (49, 51, 53, 55), first of all the vehicle-side potential equalization contact (27) is able to be brought into contact with a charging-station-side mating potential equalization contact (55), then the vehicle-side power contacts (21, 25) are able to be brought into contact with charging-station-side mating power contacts (49, 53), and finally the vehicle-side control contact (23) is able to be brought into contact with a charging-station-side mating control contact (51), and
   that, in order to release the contact between the vehicle-side contacts (21, 23, 25, 27) and the charging-station-side mating contacts (49, 51, 53, 55), first of all the vehicle-side control contact (23) is able to be brought out of contact with the charging-station-side mating control contact (51), then the vehicle-side power contacts (21, 25) are able to be brought out of contact with the charging-station-side mating power contacts (49, 53), and finally the vehicle-side potential equalization contact (27) is able to be brought out of contact with the charging-station-side mating potential equalization contact (55).

2. Device according to Claim 1, **characterized in that** the vehicle-side contacts are assigned to a contact element (11) of the vehicle (1) that, in order to produce the contact between the contacts (21, 23, 25, 27) of the vehicle (1) in the charging position and the charging-station-side mating contacts (49, 51, 53, 55), is able to be displaced, in particular in the vertical direction, in the direction of the charging-station-side mating contacts (49, 51, 53, 55) by means of a vehicle-side displacement apparatus (7).

3. Device according to Claim 2, **characterized in that** the vehicle-side contact apparatus (8) and the charging-station-side mating contact apparatus (40) are designed in such a way that, when the vehicle-side contact element (11) is displaced in the direction of the charging-station-side mating contacts (49, 51, 53, 55) by means of the displacement apparatus (7), first of all the vehicle-side potential equalization contact (27) comes into contact with the charging-station-side mating potential equalization contact (55), then the vehicle-side power contacts (21, 25) come into contact with the charging-station-side mating power contacts (49, 53), and finally the vehicle-side control contact (23) comes into contact with a charging-station-side mating control contact (51).

4.  Device according to Claim 2 or 3, **characterized in that**, in order to release the contact between the contacts (21, 23, 25, 27) of the vehicle (1) in the charging position and the charging-station-side mating contacts (49, 51, 53, 55), the vehicle-side contact element (11) is able to be displaced, in particular in the vertical direction, away from the charging-station-side mating contacts (49, 51, 53, 55) by means of the vehicle-side displacement apparatus (7).

5.  Device according to Claim 4, **characterized in that** the vehicle-side contact apparatus (8) and the charging-station-side mating contact apparatus (40) are designed in such a way that, when the vehicle-side contact element (11) is displaced away from the charging-station-side mating contacts (49, 51, 53, 55) by means of the displacement apparatus (7), first of all the vehicle-side control contact (23) comes out of contact with the charging-station-side mating control contact (51), then the vehicle-side power contacts (21, 25) come out of contact with the charging-station-side mating power contacts (49, 53), and finally the vehicle-side potential equalization contact (27) comes out of contact with the charging-station-side mating potential equalization contact (55).

6.  Device according to one of the preceding claims, **characterized in that** the receiving body (61) is formed by a base body (61), which is fastened at its base, of the charging station (5).

7.  Device according to one of the preceding claims, **characterized in that** the respective displaceable contact body (43, 45, 47) of the charging station (5) is assigned at least one tensioning element (63), in particular a spring element, that is able to be tensioned by displacing the respective contact body (43, 45, 47), in particular in the vertical direction, towards the receiving body (61), and is able to be relieved of tension by displacing the respective contact body (43, 45, 47), in particular in the vertical direction, away from the receiving body (61).

8.  Device according to Claim 7, **characterized in that** the maximum spring travel of the spring element (63) assigned to the mating potential equalization contact body (47) is greater than the maximum spring travel of the spring elements (63) assigned to the mating power contact bodies (41, 45), wherein provision is preferably made for the maximum spring travel of the spring elements (63) assigned to the mating power contact bodies (41, 45) to be greater than the maximum spring travel of the spring element (63) assigned to the mating control contact body (43).

9.  Device according to one of Claims 6 to 8, **characterized in that** the vehicle-side contact apparatus (8) and the charging-station-side mating contact apparatus (40) are designed in such a way that, when the vehicle-side contact element (11) is displaced in the direction of the charging-station-side mating contacts (49, 51, 53, 55), the vehicle-side contacts come into contact with the charging-station-side mating contacts and at least the mating potential equalization contact body (47) and the mating power contact bodies (41, 45), in particular also the mating control contact body (43), are displaced towards the receiving body (61) of the charging station (5).

10. Device according to Claim 1, **characterized in that** the charging-station-side mating contacts (49, 51, 53, 55) are assigned to a mating contact element (73) of the charging station (5) that, in order to produce the contact between the contacts (21, 23, 25, 27) of the vehicle (1) in the charging position and the charging-station-side mating contacts (49, 51, 53, 55), is able to be displaced, in particular in the vertical direction, in the direction of the vehicle-side contacts (21 to 27) by means of a charging-station-side displacement apparatus (75).

11. Device according to Claim 10, **characterized in that** the receiving body (61) is formed by a fixing body (71) that is able to be displaced relative to a base body (61), which is fastened at its base, of the charging station by means of the charging-station-side displacement apparatus (7; 71).

12. Vehicle, in particular utility vehicle, comprising a device according to one of Claims 1 to 11.

13. Method for charging an electrical energy store of a vehicle having an electrical drive, for operating a device according to one of Claims 1 to 11, wherein an electrical contact apparatus (8) is provided that is assigned to the vehicle (1) and has a first power contact (21) forming a first pole, a second power contact (25) forming a second pole, a control contact (23) and a potential equalization contact (27), and comprising a mating contact apparatus that is assigned to a charging station and has mating contacts corresponding to the vehicle-side contacts,

   wherein the vehicle-side contacts (21 to 27) are formed by two contact rails (15, 17) that are oriented in the vehicle longitudinal direction, wherein two contacts (21 to 27) are assigned to each contact rail (15, 17),

wherein, in a non-contact state, the mating potential equalization contact (55) is arranged at a different height position to the mating power contacts (49, 53), as seen in the vertical direction, and wherein, in the non-contact state, the mating power contacts (49, 53) are arranged at a different height position to the mating control contact (51), as seen in the vertical direction,

wherein a mating potential equalization contact body (47) forming the mating potential equalization contact (55) and mating power contact bodies (41, 45) forming the mating power contacts (49, 53) are fixed on a receiving body (61) of the charging station (5), so as to be displaceable in the vertical direction, relative to a mating control contact body (43) forming the mating control contact (51) and relative to one another by means of a fixing apparatus (59), and

wherein, when contact between the vehicle-side contacts (21, 23, 25, 27) and assigned charging-station-side mating contacts (49, 51, 53, 55) is produced, first of all the vehicle-side potential equalization contact (27) is brought into contact with a charging-station-side mating potential equalization contact (55), then the vehicle-side power contacts (21, 25) are brought into contact with charging-station-side mating power contacts (49, 53), and finally the vehicle-side control contact (23) is brought into contact with a charging-station-side mating control contact (51), and

wherein, when contact between the vehicle-side contacts (21, 23, 25, 27) and assigned charging-station-side mating contacts (49, 51, 53, 55) is released, first of all the vehicle-side control contact (23) is brought out of contact with the charging-station-side mating control contact (51), then the vehicle-side power contacts (21, 25) are brought out of contact with the charging-station-side mating power contacts (49, 53), and finally the vehicle-side potential equalization contact (27) is brought out of contact with the charging-station-side mating potential equalization contact (55).

## Revendications

1.  Dispositif de chargement d'un accumulateur d'énergie électrique d'un véhicule présentant un entraînement électrique, comprenant un équipement de contact électrique (8) associé au véhicule (1), qui présente un premier contact de puissance (21) formant un premier pôle, un deuxième contact de puissance (25) formant un deuxième pôle, un contact de commande (23) et un contact d'équipotentialité (27), et comprenant un équipement de contact complémentaire associé à une station de chargement, qui présente des contacts complémentaires (49, 51, 53, 55) correspondant aux contacts côté véhicule,

    les contacts côté véhicule (21, 23, 25, 27) étant formés par deux rails de contact (15, 17) orientés dans la direction longitudinale du véhicule, deux contacts (21, 23, 25, 27) étant associés à chaque rail de contact (15, 17), dans un état d'absence de contact, le contact complémentaire d'équipotentialité (55), vu dans la direction verticale, étant agencé dans une autre position en hauteur que les contacts complémentaires de puissance (49, 53) et, dans l'état d'absence de contact, les contacts complémentaires de puissance (49, 53), vus dans la direction verticale, étant agencés dans une autre position en hauteur que le contact complémentaire de commande (51),

    un corps de contact complémentaire d'équipotentialité (47) formant le contact complémentaire d'équipotentialité (55) et des corps de contact complémentaire de puissance (41, 45) formant les contacts complémentaires de puissance (49, 53) étant fixés au moyen d'un équipement de fixation (59) par rapport à un corps de contact complémentaire de commande (43) formant le contact complémentaire de commande (51) et de manière à pouvoir être déplacés l'un par rapport à l'autre dans la direction verticale sur un corps de réception (61) de la station de chargement (5), et

    l'équipement de contact côté véhicule (8) et l'équipement de contact complémentaire côté station de chargement (40) étant réalisés de telle sorte

    que, pour établir le contact entre les contacts côté véhicule (21, 23, 25, 27) et les contacts complémentaires côté station de chargement (49, 51, 53, 55), d'abord le contact d'équipotentialité côté véhicule (27) peut être amené en appui sur un contact complémentaire d'équipotentialité côté station de chargement (55), ensuite les contacts de puissance côté véhicule (21, 25) peuvent être amenés en appui sur des contacts complémentaires de puissance côté station de chargement (49, 53), et enfin le contact de commande côté véhicule (23) peut être amené en appui sur un contact complémentaire de commande côté station de chargement (51), et

    que, pour libérer le contact entre les contacts côté véhicule (21, 23, 25, 27) et les contacts complémentaires côté station de chargement (49, 51, 53, 55), d'abord le contact de commande côté véhicule (23) peut être amené à quitter le contact complémentaire de commande côté station de chargement (51), ensuite les contacts de puissance côté véhicule (21, 25) peuvent être amenés à quitter les contacts complémentaires de puissance côté station de chargement (49, 53), et enfin le contact d'équipotentialité côté véhicule (27) peut être amené à quitter le contact complémentaire d'équipotentialité côté station de chargement (55).

2. Dispositif selon la revendication 1, **caractérisé en ce que** les contacts côté véhicule sont associés à un élément de contact (11) du véhicule (1) qui, pour établir le contact entre les contacts (21, 23, 25, 27) du véhicule (1) se trouvant en position de chargement et les contacts complémentaires côté station de chargement (49, 51, 53, 55), peut être déplacé au moyen d'un équipement de déplacement côté véhicule (7), notamment dans la direction verticale, en direction des contacts complémentaires côté station de chargement (49, 51, 53, 55).

3. Dispositif selon la revendication 2, **caractérisé en ce que** l'équipement de contact côté véhicule (8) et l'équipement de contact complémentaire côté station de chargement (40) sont réalisés de telle sorte que lors d'un déplacement de l'élément de contact côté véhicule (11) au moyen de l'équipement de déplacement (7) en direction des contacts complémentaires côté station de chargement (49, 51, 53, 55), d'abord le contact d'équipotentialité côté véhicule (27) vient en appui sur le contact complémentaire côté station de chargement (55), ensuite les contacts de puissance côté véhicule (21, 25) viennent en appui sur les contacts complémentaires de puissance côté station de chargement (49, 53), et enfin le contact de commande côté véhicule (23) vient en appui sur un contact complémentaire de puissance côté station de chargement (51).

4. Dispositif selon la revendication 2 ou 3, **caractérisé en ce que** l'élément de contact côté véhicule (11) peut être déplacé pour libérer le contact entre les contacts (21, 23, 25, 27) du véhicule (1) se trouvant en position de chargement et les contacts complémentaires côté station de chargement (49, 51, 53, 55) au moyen de l'équipement de déplacement côté véhicule (7), notamment dans la direction verticale, en l'écartant des contacts complémentaires côté station de chargement (49, 51, 53, 55).

5. Dispositif selon la revendication 4, **caractérisé en ce que** l'équipement de contact côté véhicule (8) et l'équipement de contact complémentaire côté station de chargement (40) sont réalisés de telle sorte que, lors d'un déplacement de l'élément de contact côté véhicule (11) au moyen de l'équipement de déplacement (7) en l'écartant des contacts complémentaires côté station de chargement (49, 51, 53, 55), d'abord le contact de commande côté véhicule (23) quitte le contact complémentaire de commande côté station de chargement (51), ensuite les contacts de puissance côté véhicule (21, 25) quittent les contacts complémentaires de puissance côté station de chargement (49, 53), et enfin le contact d'équipotentialité côté véhicule (27) quitte les contacts complémentaires d'équipotentialité côté station de chargement (55).

6. Dispositif selon l'une quelconque des revendications précédentes, **caractérisé en ce que** le corps de réception (61) est formé par un corps de base (61), fixé côté sol, de la station de chargement (5).

7. Dispositif selon l'une quelconque des revendications précédentes, **caractérisé en ce qu'**au moins un élément de serrage (63), notamment un élément élastique, est associé au corps de contact déplaçable (43, 45, 47) respectif de la station de chargement (5), lequel peut être serré par déplacement du corps de contact (43, 45, 47) respectif, notamment dans la direction verticale, vers le corps de réception (61) et peut être desserré par déplacement du corps de contact (43, 45, 47) respectif, notamment dans la direction verticale, en l'écartant du corps de réception (61).

8. Dispositif selon la revendication 7, **caractérisé en ce que** la course élastique maximale de l'élément élastique (63) associé au corps de contact complémentaire d'équipotentialité (47) est supérieure à la course élastique maximale des éléments élastiques (63) associés aux corps de contact complémentaire de puissance (41, 45), dans lequel il est de préférence prévu que la course élastique maximale des éléments élastiques (63) associés aux corps de contact complémentaire de puissance (41, 45) soit supérieure à la course élastique maximale de l'élément élastique (63) associé au corps de contact complémentaire de commande (43).

9. Dispositif selon l'une quelconque des revendications 6 à 8, **caractérisé en ce que** l'équipement de contact côté véhicule (8) et l'équipement de contact complémentaire côté station de chargement (40) sont réalisés de telle sorte que lors d'un déplacement de l'élément de contact côté véhicule (11) en direction des contacts complémentaires côté station de chargement (49, 51, 53, 55), les contacts côté véhicule viennent en appui sur les contacts complémentaires côté station de chargement et au moins le corps de contact complémentaire d'équipotentialité (47) et les corps de contact complémentaire de puissance (41, 45), notamment aussi le corps de contact complémentaire de commande (43), sont déplacés vers le corps de réception (61) de la station de chargement (5).

10. Dispositif selon la revendication 1, **caractérisé en ce que** les contacts complémentaires côté station de chargement (49, 51, 53, 55) sont associés à un élément de contact complémentaire (73) de la station de chargement (5), lequel peut être déplacé pour établir le contact entre les contacts (21, 23, 25, 27) du véhicule (1) se trouvant en position de chargement et les contacts complémentaires côté station de chargement (49, 51, 53, 55), au moyen d'un équipement de déplacement côté station de chargement (75), notamment dans la direction verticale, en direction des contacts côté véhicule (21 à 27).

11. Dispositif selon la revendication 10, **caractérisé en ce que** le corps de réception (61) est formé par un corps de fixation (71) pouvant être déplacé au moyen de l'équipement de déplacement côté station de chargement (7 ; 71) par rapport à un corps de base (61), fixé côté sol, de la station de chargement.

12. Véhicule, notamment véhicule utilitaire, comprenant un dispositif selon l'une quelconque des revendications 1 à 11.

13. Procédé de chargement d'un accumulateur d'énergie électrique d'un véhicule présentant un entraînement électrique pour exploiter un dispositif selon l'une quelconque des revendications 1 à 11, dans lequel il est prévu un dispositif de contact électrique (8) associé au véhicule (1), qui présente un premier contact de puissance (21) formant un premier pôle, un deuxième contact de puissance (25) formant un deuxième pôle, un contact de commande (23) et un contact d'équipotentialité (27), et comprenant un équipement de contact complémentaire associé à une station de chargement, qui présente des contacts complémentaires correspondant aux contacts côté véhicule,

les contacts côté véhicule (21 à 27) étant formés par deux rails de contact (15, 17) orientés dans la direction longitudinale du véhicule, deux contacts (21 à 27) étant associés à chaque rail de contact (15, 17),
dans un état d'absence de contact, le contact complémentaire d'équipotentialité (55), vu dans la direction verticale, étant agencé dans une autre position en hauteur que les contacts complémentaires de puissance (49, 53), et dans l'état d'absence de contact, les contacts complémentaires de puissance (49, 53), vus dans la direction verticale, étant agencés dans une autre position en hauteur que le contact complémentaire de commande (51),
un corps de contact complémentaire d'équipotentialité (47) formant le contact complémentaire d'équipotentialité (55) et des corps de contact complémentaire de puissance (41, 45) formant les contacts complémentaires de puissance (49, 53) étant fixés au moyen d'un équipement de fixation (59) par rapport à un corps de contact complémentaire de commande (43) formant le contact complémentaire de commande (51) et de manière à pouvoir être déplacés l'un par rapport à l'autre dans la direction verticale sur un corps de réception (61) de la station de chargement (5), et
lors de l'établissement d'un contact entre les contacts côté véhicule (21, 23, 25, 27) et les contacts complémentaires côté station de chargement (49, 51, 53, 55) associés, d'abord le contact d'équipotentialité côté véhicule (27) est amené en appui sur un contact complémentaire d'équipotentialité côté station de chargement (55), ensuite les contacts de puissance côté véhicule (21, 25) sont amenés en appui sur des contacts complémentaires de puissance côté station de chargement (49, 53), et enfin le contact de commande côté véhicule (23) est amené en appui sur un contact complémentaire de commande côté station de chargement (51), et
lors de la libération d'un contact entre les contacts côté véhicule (21, 23, 25, 27) et les contacts complémentaires côté station de chargement (49, 51, 53, 55) associés, d'abord le contact de commande côté véhicule (23) est amené à quitter le contact complémentaire de commande côté station de chargement (51), ensuite les contacts de puissance côté véhicule (21, 25) sont amenés à quitter les contacts complémentaires de puissance côté station de chargement (49, 53), et enfin le contact d'équipotentialité côté véhicule (27) est amené à quitter le contact complémentaire d'équipotentialité côté station de chargement (55).

Fig. 1

Fig. 2

Fig. 3

Fig. 4

Fig. 5

Fig. 6

EP 3 357 740 B1

Fig. 7

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3115248 A1